# EUROPÄISCHE PATENTSCHRIFT

(11) **EP 0 571 560 B1**
(45) Veröffentlichungstag und Bekanntmachung des Hinweises auf die Patenterteilung: **29.11.1995**
(21) Anmeldenummer: 92908758.3
(22) Anmeldetag: 07.05.1992
(51) Int. Cl.: A01J 25/11

(54) **VERFAHREN ZUR KÄSEBRUCH-ABFÜLLUNG IN KÄSEFORMEN UND MASCHINE ZUM ANWENDEN DES VERFAHRENS**
PROCESS AND MACHINE FOR FILLING CHEESE MOULDS WITH CURD
PROCEDE ET MACHINE DE REMPLISSAGE DE MOULES A FROMAGE AVEC DU CAILLE

(30) Priorität: 15.05.1991 DE 4115837
(43) Veröffentlichungstag der Anmeldung: 01.12.1993
(73) Patentinhaber: SCHWARTE-WERK GmbH, D-21514 Büchen (DE)
(72) Erfinder: COENEN, Johannes, D-4415 Sendenhorst (DE)
(74) Vertreter: DIEHL GLAESER HILTL & PARTNER
(86) Internationale Anmeldenummer: EP9200994
(87) Internationale Veröffentlichungsnummer: WO9220217

(56) Entgegenhaltungen:
- EP-A- 0 371 353
- DE-A- 1 913 698
- DE-A- 3 319 272
- DE-A- 3 538 555
- DE-C- 3 903 319
- FR-A- 1 460 510
- GB-A- 866 486
- US-A- 3 802 332
- US-A- 4 750 415

## Beschreibung

Die Erfindung betrifft ein Verfahren zur Käsebruch-Abfüllung in Käseformen und eine Maschine zum Anwenden des Verfahrens, wobei ein Käsebruch-Molke-Gemisch in eine siebartige, mit einem separaten Deckelteil versehene und mit Molke geflutete Käseform unterhalb des Molkespiegels eingefüllt wird, in welcher die mit dem Käsebruch mitfolgende Molke sich abscheidet und in welcher ein Pressen des Käsebruchs ausgeführt wird.

Ein Verfahren der einleitend gekennzeichneten Gattung ist aus der DE 33 19 272 A1 bekannt. Es verhindert durch die Einbringung des Käsebruch-Molke-Gemischs unterhalb des Molkespiegels den Kontakt des Käsebruchs mit der Luft, der besonders bei der Herstellung bestimmter Käsesorten wie Hartkäse (Emmentaler), Schnittkäse (Gouda, Edamer, Tilsiter) oder halbfester Schnittkäse die Qualität der entstehenden Käsemasse nachteilig beeinflussen würde. Das vorgeschlagene Verfahren zur schonenden und gewichtsgenauen Einbringung des Käsebruchs in die Käseform und die Vorrichtung zur Anwendung des Verfahrens beschränken sich allerdings auf einen diskontinuierlichen Verfahrensablauf, bei dem das in einem Käsekessel gebildete Käsebruch-Molke-Gemisch chargenweise verarbeitet wird. Hierfür ist unter anderem vorgesehen, daß eine aus Siebblech geformte und mit einem separaten Deckelteil versehene Käseform in eine Ablaßwanne, die mit ein wenig Molke gefüllt ist, eingesetzt wird, wo sich aus dem vom Käsekessel abgelassenen Käsebruch-Molke-Gemisch die mitfolgende Molke abscheidet. Wesentlich bei dem bekannten Gegenstand ist, daß in der Käseform ein siebartiger Deckelteil verwendet wird, mit dem die Form für die Dauer der Abfüllung des Käsebruchs verschlossen wird. Durch diese Maßnahme wird das sonst übliche Ebnen der Käsebruchoberfläche in der Käseform vor der darauffolgenden Vorpreßphase vermieden. Das durch den Deckelteil begrenzte Käseformvolumen stellt somit eine gewichtsgenaue Einbringung des Käsebruchs in die Käseform sicher, sofern bestimmte Voraussetzungen hinsichtlich der homogenen Verteilung des Käsebruchs in der Molke erfüllt sind.

Aus der DE-OS 19 13 698 ist weiterhin ein Verfahren zum gleichmäßigen Verteilen des Bruch-Molke-Gemisches bei der Käseherstellung, insbesondere bei der Hartkäse-Herstellung, auf mehrere Aufnahme-Behälter mittels eines über den Aufnahme-Behältern angeordneten Füllorgans mit mindestens einer Auslauföffnung bekannt geworden, bei dem das Füllorgan beim Füllen derart relativ zu den Aufnahme-Behältern bewegt wird, daß die Auslauföffnung in periodisch wiederholter Folge nacheinander kontinuierlich über die einzelnen Aufnahme-Aufnahme-Behälter geführt wird. Bei diesem bekannten Verfahren steht die gleichmäßigere Verteilung des Bruch-Molke-Gemisches auf die Aufnahme-Behälter im Vordergrund, wobei ein freies Ausfließen des Käsebruch-Molke-Gemischs aus Öffnungen, die oberhalb der nach oben offenen und in Kontakt mit der Luft stehenden Käseformen angeordnet sind.

Hieraus ergeben sich gleich mehrere Nachteile. Zum einen stürzt ein Teil des aus den Verteilerrohren ausgebrachten Käsebruch-Molke-Gemischs als Freistrahl in die in einem bestimmten Abstand unterhalb der Auslauföffnung angeordnete Käseform. Dies ergibt eine mechanische Beanspruchung des Bruchkornes, welche zur Staubbildung und damit zu Bruchverlusten führt. Darüber hinaus ist durch den frei austretenden Käsebruch-Molke-Strahl ein Kontakt mit der umgebenden Luft in geradezu idealer Weise gegeben. Im Hinblick auf die heutzutage geforderte hohe Qualität des Produktes ist eine derartige Verfahrensweise nicht tolerierbar.

Die mechanische Beeinträchtigung des Käsebruchs wird beim bekannten Verfahren und der Vorrichtung zu seiner Durchführung noch dadurch verstärkt, daß die Verteilerrohre in periodisch wiederholter Folge kontinuierlich über die einzelnen nacheinander Aufnahme-Behälter geführt werden, wobei sich die Einbringbedingungen (z. B. Füllhöhe) ständig ändern. Maßnahmen zur Weiterbehandlung des Käsebruchs in der Käseform sind bei der bekannten Vorrichtung nicht vorgesehen.

Durch die im Rahmen der Vorrichtung vorgesehene Teilervorrichtung ist beispielsweise ein unbehinderter Zugang von Preßstempeln zu den einzelnen Käseformen nicht möglich. Die bekannte Vorrichtung ist zumindest bezüglich einer Weiterbehandlung des Käsebruchs nach dessen Abfüllung in die Käseform weder einfach und flexibel zu handhaben, noch ist sie in dieser Ausprägung in einer automatischen Produktionslinie zur Käseherstellung integrierbar.

Darüber hinaus ist es für eine Bearbeitung von Käsebruch bekannt, in eine formenfreie Wanne ein Gemisch aus Käsebruch und Molke einzufüllen, wobei durch eine besondere Ausgestaltung einer Verteileinrichtung (DE 39 03 319 C1) sichergestellt ist, daß der Käsebruch auf seinem gesamten Transportweg von der Zufuhrstelle in die Füll- und Verteileinrichtung bis hinab in die Wanne in einer Molkesäule absinken kann. Dies ergibt zum einen eine äußerst schonende Einbringung des empfindlichen Bruchkornes, zum anderen können Lufteinschlüsse infolge ihres Auftriebs in der Molke nach oben abgeschieden werden. Alsdann wird durch Abfuhr der Molke aus der Wanne ein zusammenhängender schichtförmiger Käsebruchstrang in der Wanne gebildet. Dieser wird danach aus der Wanne herausgefördert und in Stücke zerschnitten, wonach die gebildeten Stücke in Preßformen einer neben der Wanne angeordneten Presse umgesetzt werden. In der Presse werden die Käsebruchstücke gepreßt und Käseformlinge gebildet, die alsdann weiteren Anlageteilen der Produktionslinie zur nachfolgenden Behandlung zugeführt werden.

Mit dem letztgenannten Verfahren und der zugeordneten Vorrichtung wird zwar eine schonende Einbringung des Käsebruchs in die Wanne sichergestellt; die hinter der Wanne durch Schneiden gebildeten Käsebruchstücke differieren allerdings hinsichtlich ihres Gewichtes, da der in der Wanne gebildete schichtförmige Käsebruchstrang in Abhängigkeit von der Menge des in die Wanne eingefüllten Käsebruch-Molke-Gemischs von Charge zu Charge Höhendifferenzen aufweist. Weiterhin ist nachteilig, daß die beim Schneiden des Käsebruchstranges gebildeten Bruchstücke beim Umsetzen in die Preßformen der neben der Wanne angeordneten Presse mechanisch beansprucht werden, und daß das gesamte Verfahren an sich keine kontinuierliche oder wenigstens quasikontinuierliche Verarbeitung des Käsebruchs im Rahmen einer automatischen Produktionslinie erlaubt.

In der US 47 50 415 wird eine Vorrichtung zum Formen und Fressen von Käsebruch beschrieben, bei der die Käseformen mit einem separaten Deckelteil, welches als Preßstempel verwendet wird, versehen sind und bei der eine Dosiervorrichtung für eine vorbestimmte Menge an Käsebruch für die einzelnen Käseformen vorgesehen ist. Aus einem stetig zugeführten Käsebruch-Molke-Gemisch werden nacheinander und in kontinuierlicher oder schrittweise getakteter Folge gleiche Volumina abgegrenzt und jeweils den Käseformen zugeteilt und in diese restlos eingefüllt. Es ist bei dieser bekannten Vorrichtung weder eine Einbringung des Käsebruchs unterhalb des Molkespiegels in die Käseform gegeben, noch wird während der Einbringung in die Käseform ein Kontakt des Käsebruchs mit der Luft weitgehend vermieden. Die wesentlichen technologischen Merkmale zur Sicherstellung einer hohen Qualität des Käseproduktes (schonende Einbringung unterhalb des Molkespiegels und weitestgehende Unterbindung des Kontaktes zwischen Käsebruch und Luft) sind durch die bekannte Vorrichtung nicht gegeben.

Schließlich sind ein Verfahren zur Herstellung von Bruchblöcken für die Käsezubereitung sowie eine Vorrichtung hierfür bekannt (DE 35 38 555 A1), die dadurch gekennzeichnet sind, daß ein Käsebruch-Molke-Gemisch kontinuierlich mit Überdruck auf ein Drainageband aufgebracht wird und dort einige Zeit diesem Überdruck für eine erste Drainage ausgesetzt bleibt, daß das Käsebruch-Molke-Gemisch taktweise jeweils über eine Strecke vorwärtsbewegt wird, die einer Hauptabmessung des fertigen Bruchblockes entspricht, daß von dem Bruchkuchen ein Bruchblock abgeschnitten, unter Einfluß seines Eigengewichtes bei stehender Unterlage weiter von Molke befreit und dann zur Käseerzeugung weitergegeben wird. Darüber hinaus werden Maßnahmen vorgeschlagen, wie die Dicke des Bruchkuchens in Abhängigkeit von dem dem Käsebruch-Molke-Gemisch aufgeprägten Zuführdruck gesteuert und wie der Bruchkuchen, ggf. in Abhängigkeit von seiner Dicke, einer vertikalen Vorpressung unterworfen wird. Mit diesem bekannten Verfahren ist weder eine schonende Behandlung des Käsebruchs, wie sie mit den vorgenannten Verfahren gemäß DE 33 19 272 A1 bzw. DE 39 03 319 C1 erzielbar ist, in adäquater oder vergleichbarer Weise möglich, noch stellt dieses Verfahren Käsebruchstücke bereit, die hinsichtlich ihrer Gewichtsgenauigkeit mit jenen vergleichbar sind, die aus dem Verfahren gemäß DE 33 19 272 A1 hervorgehen. Darüber hinaus ist nachteilig, daß die von dem quasikontinuierlich erzeugten Bruchkuchen abgeschnittenen Bruchblöcke in Preßformen umgesetzt werden müssen, wodurch sie der vorstehend bereits erwähnten und sich nachteilig auf die Qualtität des Käseerzeugnisses auswirkenden mechanischen Beanspruchung unterworfen werden. Allerdings ist das bekannte Verfahren weitgehend flexibel nutzbar und in eine automatische Produktionslinie zur Käseherstellung ohne weiteres integrierbar.

Ausgehend vom vorgenannten Stand der Technik liegt der Erfindung die Aufgabe zugrunde, ein Verfahren zur gewichtsgenauen, schonenden Einbringung vorbestimmter Mengen eines Käsebruch-Molke-Gemischs in Käseformen und dessen dortige Weiterbehandlung zu schaffen, welches einfach und flexibel zu handhaben ist und günstig in eine automatische Produktionslinie integrierbar ist. Ferner ist es Aufgabe der Erfindung, eine Maschine zum Anwenden des Verfahrens vorzuschlagen.

Die Lösung der gestellten Aufgabe wird durch Anwendung der Kennzeichenmerkmale des Anspruchs 1 erreicht. Vorteilhafte Weiterbildungen des vorgeschlagenen Verfahrens sind Gegenstand der Ansprüche 2 bis 4. Eine Maschine zum Anwenden des Verfahrens ist gekennzeichnet durch die im kennzeichnenden Teil des Anspruchs 5 angegebenen Merkmale. Die Ansprüche 6 bis 11 betreffenen vorteilhafte Ausgestaltungen der vorgeschlagenen Maschine.

Das Verfahren vereinigt in sich eine Reihe von Vorteilen, die in ihrer Gesamtheit bislang durch kein bekanntes Verfahren realisiert werden konnten. Zum einen ist durch die Einbringung des Käsebruch-Molke-Gemischs unterhalb des Molkespiegels eine gleichmäßige und schonende, von Lufteinschlüssen freie Einbringung des Käsebruchs in die Käseform gewährleistet. Da die in die Käseform einzubringende Käsebruchmenge zunächst in Verbindung mit einer wesentlich größeren Menge an Molke volumenmäßig abgegrenzt wird, ist letztlich eine außerordentlich gewichtsgenaue Abfüllung des Käsebruchs in die Käseform möglich. Dies setzt allerdings eine homogene Verteilung des Käsebruchs in Molke voraus; eine Forderung, die jedoch im Zuge der Herstellung des Käsebruchs im Käsefertiger bzw. im Rahmen der Bereitstellung des Käsebruchs in einem Puffertank durch geeignete Rühr- und Verteileinrichtungen ohne weiteres zu erfüllen ist. Eine Vorentmolkung ist beim vorgeschlagenen Verfahren nicht notwendig, im Gegenteil, die bei der Abfüllung des Käsebruchs in die Käseform mitgeführte relativ große Molkemenge erleichtert eine gewichtsgenaue Abfüllung des Käsebruchs. Da verfahrenstechnisch sichergestellt ist, daß das volumenmäßig abgegrenzte Käsebruch-Molke-Gemisch über eine vorbestimmte erste Zeitspanne allein unter freiem Zulauf in die geflutete Käseform eingefüllt wird, ergibt sich die denkbar schonendste, von Lufteinschlüssen freie Einbringung des Käsebruchs in die Käseform und eine Trennung des in der Käseform verbleibenden Käsebruchs von der Molke und deren Abscheidung in das Molkebad. Da weiterhin die Portionierung des Käsebruchs unmittelbar in der Käseform erfolgt, und sowohl ein Vorpressen als auch ein nachgeschaltetes Pressen innerhalb dieser Käseform erfolgen kann, ist ein Umsetzen des Bruchkuchens in die eigentliche Preßform, wie dies bei bekannten Verfahren erforderlich ist, nicht mehr notwendig. Damit entfällt die bislang bei diesem Umsetzvorgang aufgetretene nachteilige mechanische Einwirkung auf den Bruchkuchen.

Damit das vorgeschlagene Verfahren an die jeweils zu fordernden Produktionsbedingungen anpaßbar ist, sieht eine vorteilhafte Ausgestaltung vor, daß das abgegrenzte Volumen des Käsebruch-Molke-Gemischs, dessen Füllzeit in die Käseform und die Preßzeit des Käsebruchs in der Käseform in einem festen Verhältnis zueinander regelbar sind. Dies wird in Verbindung mit der vorgeschlagenen Maschine dadurch erreicht, daß die Gesamtzahl der die Maschine durchlaufenden Käseformen entweder schneller oder langsamer durch die Maschine hindurchgeführt wird.

Darüber hinaus sieht eine weitere Ausgestaltung des vorgeschlagenen Verfahrens vor, daß das abgegrenzte Volumen des Käsebruch-Molke-Gemischs unabhängig von der Füllzeit und der Preßzeit regelbar ist. Diese Abwandlung des Verfahrens wird durch Veränderung der Zufuhrleistung des Käsebruch-Molke-Gemischs zur Maschine sichergestellt.

Eine andere Ausgestaltung des Verfahrens sieht vor, daß jeweils das Volumen, die Füllzeit und die Preßzeit auf einen bestimmten, in Grenzen frei wählbaren Nennwert festlegbar ist, der im wesentlichen von den beiden anderen Werten unabhängig ist. Eine derartige Determinierung der verfahrenstechnischen Schlüsseldaten ist durch Bemessung der die vorgeschlagene Maschine kennzeichnenden Dosierkammern und durch die Anzahl der vorgesehenen Positionen, die die Käseformen innerhalb der Maschine durchlaufen müssen, zu erreichen.

Die Maschine zum Anwenden des Verfahrens geht von der unterhalb des Molkespiegels in einer Wanne angeordneten Käseform aus, die an eine der Zufuhr von Käsebruch-Molke-Gemisch dienenden Fülleitung angeschlossen ist, wobei der Deckelteil zusätzlich als Preßglied dient, mit dem der in der Käseform verbleibende Käsebruch gepreßt wird. Die erfindungsgemäß nacheinander und in kontinuierlicher oder schrittweise getakteter Abfolge ablaufenden Verfahrensschritte ergeben sich zwangsläufig aus der vorgeschlagenen Ausgestaltung der Maschine als Karussellförderer. In diesem Karussellförderer befinden sich zur gleichen Zeit eine Anzahl 1 bis n Käseformen in regelmäßiger, über den Umfang verteilter Anordnung. Sie nehmen dabei bei ihrem Durchlauf durch den Karussellförderer nacheinander die Positionen P₁ bis Pₙ ein, wobei den einzelnen Positionen bestimmte Behandlungsschritte im Rahmen des vorgeschlagenen Verfahrens zugeordnet sind. Wesentlich ist hierbei, daß über eine bestimmte Anzahl nebeneinander angeordneter Positionen das in der Dosierkammer volumenmäßig abgegrenzte Käsebruch-Molke-Gemisch über die beim Durchlauf durch diese Positionen resultierende Durchlaufzeit in die zugeordnete, in ihrem Volumen begrenzte Käseform abgefüllt wird. Aus der vorstehend genannten Durchlaufzeit ergibt sich zwangsläufig dann eine entsprechende Füllzeit, wobei über die Winkelgeschwindigkeit des Karussellförderers eine Regelung möglich ist.

Darüber hinaus läßt sich durch die erfindungsgemäße Maschine ein Absenken der Käseform in die mit Molke gefüllte Wanne, ihr Verbleiben dort bis zur vollständigen Trennung des Käsebruchs von der mitgeführten Molke, ein Herausheben der Käseform aus dem Molkebad und ein Abtropfen auf dem Weg zur Weiterbehandlung des Käsebruchs im Rahmen eines Preßvorganges auf einfache Weise kontinuierlich oder quasikontinuierlich durch schrittweise getaktete Drehschubförderung durchführen. Weiterhin ist wesentlich, daß innerhalb des Karussellförderers und über eine Anzahl von nebeneinander angeordneten Positionen Preßvorrichtungen vorgesehen sind, von denen jede einem Deckelteil zugeordnet ist und auf diesen einwirkt. Die Dosierung des Käsebruch-Molke-Gemischs innerhalb einer Dosierkammer erfolgt über eine oberhalb dieser Dosierkammer angeordnete Zufuhrleitung für das Käsebruch-Molke-Gemisch, wobei die Anpassung des zu dosierenden Volumens an die zu fordernden Produktionsbedingungen entweder durch Veränderung der Durchflußleistung innerhalb der Zufuhrleitung oder aber durch Veränderung der Winkelgeschwindigkeit des Karussellförderers möglich ist.

Die vorgeschlagene Maschine findet eine relativ einfache kinematische Ausgestaltung als Karussellförderer, wenn die Dosierkammern einen mittelbar oder unmittelbar angetriebenen Teil des Karussellförderers bilden und jeweils über ihre Fülleitung und den Füllkopf die Käseformen zwangsweise verschieben. Die an den Füllkopf form- und/oder kraftschlüssig angekuppelten Käseformen werden auf diese Weise zwangsläufig durch die gesamte Maschine hindurchgeführt, so daß sie keines eigenen Antriebs, sondern lediglich einer Stütz- und Führungsbahn bedürfen.

Dabei kann, wie dies eine weitere Ausgestaltung der vorgeschlagenen Maschine vorsieht, der Karussellförderer die Käseformen kontinuierlich oder schrittweise getaktet verschieben, wobei der in Frage kommende Antrieb den Karussellförderer entweder mit einer stufenlos regelbaren Winkelgeschwindigkeit oder als Drehschubförderer mit regelbarer Taktfrequenz antreibt.

Eine kompakte Ausgestaltung des Karussellförderers ergibt sich nach einer weiteren vorteilhaften Ausgestaltung der vorgeschlagenen Maschine dadurch, daß jede Dosierkammer, in Richtung der Drehachse des Karussellförderers gesehen, kreisausschnittsförmig ausgebildet ist und alle Dosierkammern im Verbund miteinander einen geschlossenen, eine Führungssäule des Karussellförderers konzentrisch umschließenden Kreisring bilden.

Damit die Käseformen in das Molkebad abgesenkt und anschließend aus diesem wieder herausgehoben werden können und damit darüber hinaus der Deckelteil Zusätzlich als Preßglied innerhalb der Käseform dienen kann wird, gemäß einer anderen vorteilhaften Ausgestaltung der vorgeschlagenen Maschine, der Füllkopf gegenüber der Fülleitung mittels einer teleskopförmigen, durch die Preßvorrichtung angetriebenen Rohranordnung verschoben. Um die Handhabung des Füllkopfes einerseits als Teil des Füllorgans und andererseits als Teil der Preßeinrichtung möglichst einfach zu gestalten, wird er, gemäß einer weiteren Ausgestaltung der vorgeschlagenen Maschine, derart ausgebildet, daß er entweder den oberen Rand der rahmenförmigen Käseform dicht umfassen oder den Deckelteil, vorzugsweise durch seitlichen, in der radialen ErStreckung des Karussellförderers orientierten Einschub, aufnehmen kann.

Darüber hinaus ist es im Rahmen der vorgeschlagenen Maschine möglich, die Käseform kassettenartig zu unterteilen, wobei der Deckelteil dann eine der Unterteilung in Kassetten entsprechende Unterteilung in Preßglieder aufweist. Eine derartige Unterteilung der Käseform ist dann zweckmäßig, wenn das zu erzielende Endprodukt von seinen Abmessungen her nur durch Zerteilen des in der nicht unterteilten Käseform hergestellten Käseformlings möglich wäre und eine derartige Zerteilung im Zuge des Herstellungsverfahrens einer bestimmten Käsesorte unterbleiben soll. In diesem Falle werden die Abmessungen des herzustellenden Käses bereits in der kassettenartig unterteilten Käseform festgelegt, wobei die erforderliche gewichtsgenaue Dosierung des Käsebruchs innerhalb des Kassettenvolumens im Rahmen des vorstehend skizzierten erfindungsgemäßen Verfahrens erfolgt.

Ein Ausführungsbeispiel der Erfindung ist in der Zeichnung dargestellt und wird im folgenden näher beschrieben. Es zeigen
- Figur 1: das erfindungsgemäße Verfahren in schematischer Darstellung, wobei die einzelnen Verfahrensschritte im Zuge der Behandlung der Käseformen beim Durchlauf durch die vorgeschlagene Maschine zum Anwenden des Verfahrens in den Positionen P₁ bis P₂₀ in ebener, linearer Abwicklung dargestellt sind;
- Figur 2: in schematischer Darstellung eine Draufsicht auf die als Karussellförderer ausgebildete Maschine zum Anwenden des erfindungsgemäßen Verfahrens und
- Figur 3: einen Meridianschnitt durch die Maschine gemäß Figur 2 einerseits im Bereich der Befüllung der Käseform (Positionen P₄ bis P₈) und andererseits im Bereich der Käsebruch-Vorpressung (Positionen P₁₀ bis P₁₉).

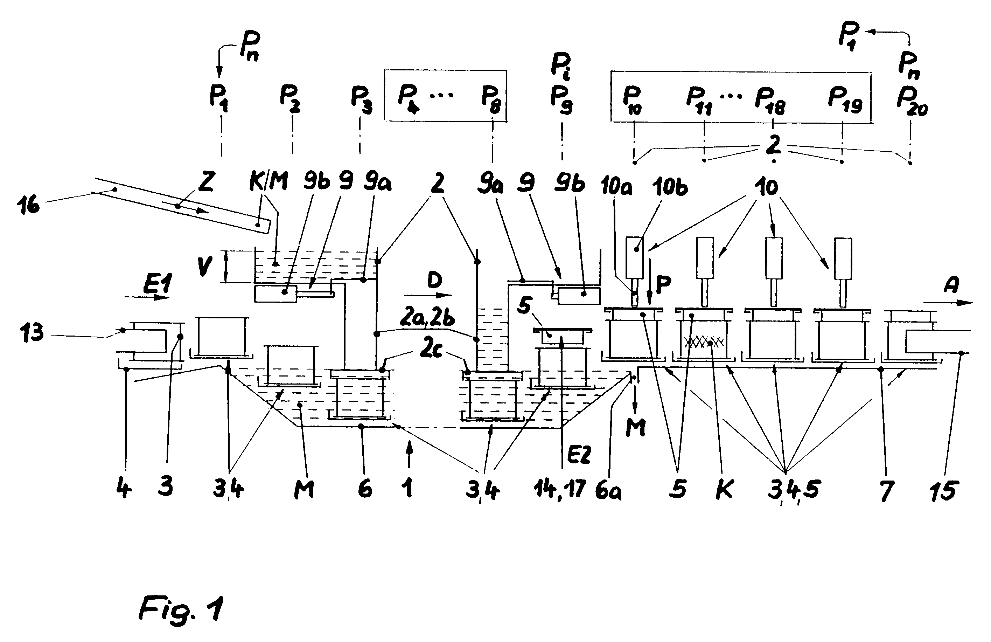

Ein Karussellförderer 1 (Figur 1) nimmt in regelmäßiger, über den Umfang verteilter Anordnung n=20 Käseformen 3,4 in den Positionen P₁ bis P₂₀ auf, wobei die über einen Käseformen-Einlaufförderer 13 an einem Käseformen-Einlauf E1 zugeführten Käseformen 3,4 aus einem rahmenförmigen Teil 3 und einem Boden 4 bestehen. In der Position P₁ befindet sich die Käseform 3,4 erstmals im Karussellförderer 1; sie wird in Position P₂ in eine mit Molke M gefüllte Wanne 6 abgesenkt, deren Eintauchtiefe sich unterhalb der Einlaufhöhe des Käseformen-Einlaufförderers 13 erstreckt und wenigstens ein vollständiges Fluten der Käseformen 3,4 erlaubt. Mit D ist die Durchlauf- bzw. Drehrichtung des Karussellförderers 1 bezeichnet. Beim Erreichen der Position P₃ ist eine Dosierkammer 2 über eine oberhalb derselben angeordnete Zufuhrleitung 16 mit einem Käsebruch-Molke-Gemisch K/M vorbestimmten Volumens V befüllt. Die Zufuhrrichtung des Gemischs ist mit Z gekennzeichnet. Die volumetrische Mengenvorlage des Käsebruch-Molke-Gemischs K/M in der Dosierkammer 2 wird einerseits bestimmt durch seinen Volumenstrom in der Zufuhrleitung 16 und andererseits durch die Winkelgeschwindigkeit, mit der die Dosierkammer 2 unterhalb der Zufuhrleitung 16 vorbeigeführt wird.

In der Position P₃ ist eine mit einem auf- und abwärts beweglichen Füllkopf 2c versehene, mittels einer Verschlußvorrichtung 9, bestehend aus einem Verschluß 9a und einem ersten Antrieb 9b, schaltbare Fülleitung 2a mit dem oberen Rand der rahmenförmigen Käseform 3 form- und/oder kraftschlüssig verbunden, wobei der Füllkopf 2c gegenüber der Fülleitung 2a mittels einer in Position P₃ nicht dargestellten teleskopförmigen, durch eine ebenfalls in dieser Position nicht gezeigte Preßvorrichtung 10 angetriebene Rohranordnung 2b verschoben wird.

Aus der Position P₃ heraus wird nunmehr der Verschluß 9a geöffnet, so daß das Käsebruch-Molke-Gemisch K/M über die Füllleitung 2a und die teleskopförmige Rohranordnung 2b aus der Dosierkammer 2 in die über den Füllkopf 2c angeschlossene Käseform 3,4 einströmen kann. Auf dem Weg der Käseform 3,4 von der Position P₃ zur Position P₈ wird das in der Dosierkammer 2 abgegrenzte Volumen V des Käsebruch-Molke-Gemischs K/M vollständig in die Käseform 3,4 überführt. Dort erfolgt unterhalb des Molkespiegels eine Trennung des in der Käseform 3,4 verbleibenden Käsebruchs K von der Molke M und deren Abscheidung in das Molkebad. Zu diesem Zweck ist die Käseform 3,4 siebartig perforiert, so daß durch ihre Wände hindurch eine Drainage der Molke stattfinden kann.

In Position P₉ wird die mit einer vorbestimmten Menge des Käsebruchs K befüllte Käseform 3,4 aus dem Molkebad der Wanne 6 zum Abtropfen herausgehoben und über einen Deckel-Einlauf E2 mittels eines Deckel-Einlaufförderers 14 in Verbindung mit einer Deckel-Auflegevorrichtung 17 mit einem Deckelteil 5 versehen. Die Höhe des Molkespiegels in der Wanne 6 ist durch einen im Bereich der Position P₁₀ dargestellten Überlauf 6a begrenzt, über den die überschüssige Molke M abgeführt wird.

In den dem Deckel-Einlauf E2 nachfolgenden Positionen P₁₀ bis P₁₉ ist jedem Deckelteil 5 der Käseform 3,4 die aus einem Stößel 10a und einem Stößelantrieb 10b bestehende Preßvorrichtung 10 zugeordnet. Der Deckelteil 5 übt in Preßrichtung P einen definierten Vorpreßdruck auf den in der Käseform 3,4 verbleibenden Käsebruch K aus. Die jeweils mit dem Deckelteil 5 verschlossenen Käseformen 3,4 stützen sich in den Positionen P₁₀ bis P₂₀ auf einem Gestell 7 des Karussellförderers 1 ab. Über einen Käseformen-Auslauf A werden die Käseformen 3,4,5 in Position P₂₀ mittels eines Käseformen-Auslaufförderers 15 aus dem Karussellförderer 1 herausgeführt. In den Positionen P₁₀ bis P₂₀ sind die Dosierkammern 2 nicht mehr bildlich dargestellt. Gleichwohl sind sie in diesen Positionen vorhanden, wobei die Preßvorrichtung 10 jeweils über die gleichfalls nicht mehr dargestellte teleskopförmige Rohranordnung 2b an dem Deckelteil 5 angreift.

Die vorstehend angenommene Anzahl n=20 Käseformen 3,4 zur Darstellung des erfindungsgemäßen Verfahrens stellt lediglich ein mögliches Ausführungsbeispiel dar. Es versteht sich, daß diese Anzahl den jeweiligen Bedürfnissen des Produktionsverfahrens und der Produktionslinie bei der jeweiligen Käseherstellung angepaßt werden kann. Bei einer Anzahl n Käseformen 3,4 ergeben sich die gleiche Anzahl von Positionen Pₙ, die von den Käseformen 3,4 durchlaufen werden müssen, wobei der Position P₁ in jedem Falle der Käseformen-Einlaufförderer 13 zur Zufuhr der Käseformen 3,4 zugeordnet ist, der Position Pₙ die Ausschubvorrichtung 11 sowie der Käseformen-Auslaufförderer 15 zur Abfuhr der mit Käsebruch K gefüllten Käseform 3,4,5 und einer Position Pᵢ der Deckel-Einlaufförderer 14 sowie die Deckel-Auflegevorrichtung 17 zugeordnet sind. Über die Anzahl der zwischen den Positionen P₃ und Pᵢ vorgesehenen Positionen kann die Füllzeit T_{F} für das Füllen der Käseform 3,4 mit der volumetrisch vorbestimmten Menge des Käsebruch-Molke-Gemischs K/M determiniert werden. In gleicher Weise wird durch die Anzahl der zwischen den Positionen Pᵢ und Pₙ vorgesehenen Positionen die Preßzeit T_{P} des in der Käseform 3,4,5 verbleibenden Käsebruchs K festgelegt. Auf diese Weise können die Füllzeit T_{F} und die Preßzeit T_{P} unabhängig voneinander jeweils auf einen in Grenzen frei wählbaren Nennwert festgelegt werden. Andererseits lassen sich das in der Dosierkammer 2 abgegrenzte Volumen V des Käsebruch-Molke-Gemischs K/M, dessen Füllzeit T_{F} in die Käseform 3,4 und die Preßzeit T_{P} des Käsebruchs K in der Käseform 3,4 über die Winkelgeschwindigkeit des Karussellförderers 1 in einem festen Verhältnis zu einander regeln. Darüber hinaus ist das abgegrenzte Volumen V in der Dosierkammer 2 unabhängig von der Füllzeit T_{F} und der Preßzeit T_{P} über den Volumenstrom in der Zufuhrleitung 16 regelbar.

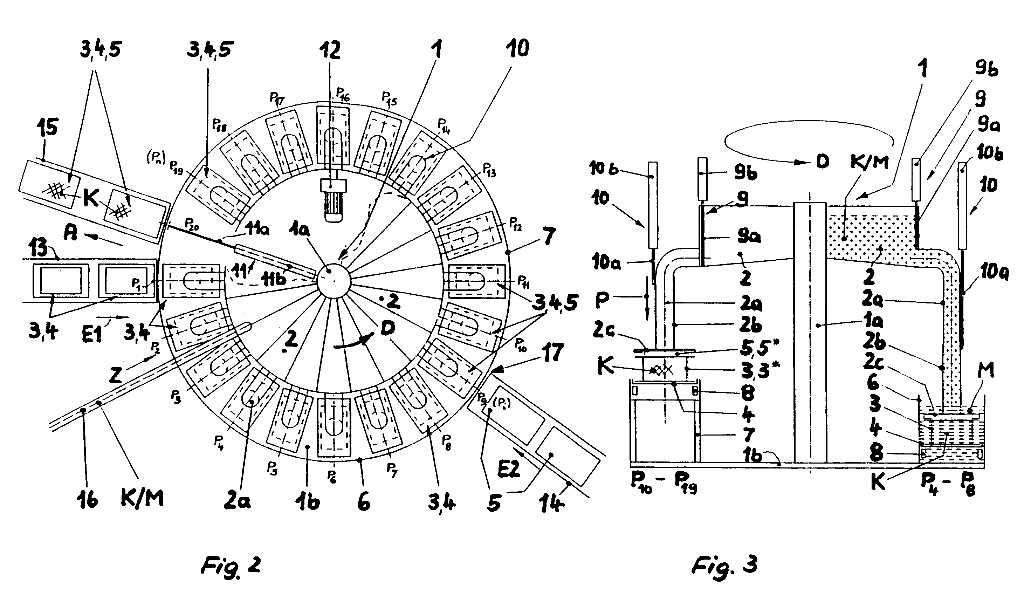

In den Figuren 2 und 3 ist die gegenständliche Ausbildung der Maschine zum Anwenden des erfindungsgemäßen Verfahrens im einzelnen veranschaulicht. Soweit die in Figur 1 benannten Bauteile keiner weiteren Erläuterung bedürfen, wird bei der Beschreibung der Maschine gemäß den Figuren 2 und 3 auf den bereits vorstehend vorgetragenen Sachverhalt verwiesen. Der Karussellförderer 1 weist im Zentrum eines kreisförmigen Rahmens 1b eine Führungssäule 1a auf, um die herum sich eine Anzahl 1 bis 20 Käseformen 3,4 in regelmäßiger, über den Umfang verteilter Anordnung in den Positionen P₁ bis P₂₀ gruppieren. Diese Positionen P₁ bis P₂₀ werden nacheinander von jeder Käseform 3,4 durchlaufen (Figur 2). Man erkennt weiterhin, deutlicher als bei der Darstellung gemäß Figur 1, in der Position P₁ den Käse-formen-Einlauf E1 über den Käseformen-Einlaufförderer 13. Der Position P₂₀ sind die Aufschubvorrichtung 11, bestehend aus einem Ausstoßer 11a und einem zweiten Antrieb 11b, sowie der Käseformen-Auslaufförderer 15 zur Abfuhr der mit Käsebruch K gefüllten Käseform 3,4,5 zugeordnet. In der Position P₉, allgemein der Position Pᵢ, befindet sich der Deckel-Einlauf E2 mit dem Deckel-Einlaufförderer 14 in Verbindung mit der Deckel-Auflegevorrichtung 17. Weiterhin wird verdeutlicht, daß zwischen den Positionen P₂ und P₃ und oberhalb der Dosierkammer 2 die Zufuhrleitung 16 für das Käsebruch-Molke-Gemisch K/M endet, so daß beim Durchlauf der Dosierkammer 2 in der angegebenen Drehrichtung D aus der Position P₂ in die Position P₃ diese jeweilige Dosierkammer 2 sozusagen von der Zufuhrleitung 16 erfaßt und mit einer volumetrisch vorbestimmten Menge des Käsebruch-Molke-Gemischs K/M beaufschlagt wird. Zwischen den Positionen P₁ und P₁₀ bzw. Pᵢ₊₁ ist die mit Molke M gefüllte Wanne 6 angeordnet, in der aufgrund ihrer Eintauchtiefe unterhalb der Einlaufhöhe des Käseformen-Einlaufförderers 13 ein vollständiges Fluten der Käseformen 3,4 möglich ist. Weiterhin ist dargestellt, daß zwischen den Positionen P₉ und P₂₀ bzw. Pᵢ und Pₙ jedem Deckelteil 5 der Käseform 3,4 eine Preßvorrichtung 10 zugeordnet ist (siehe Figur 3).

Die Dosierkammern 2 bilden einen mittelbar oder unmittelbar angetriebenen Teil des Karussellförderers 1, wobei sie jeweils über die Fülleitung 2a (Figur 2) und den Füllkopf 2c (Figur 3) die Käseformen 3,4 bzw. 3,4,5 zwangsweise verschieben. Der Antrieb des Karussellförderers 1 und damit die Verschiebung der Käseformen 3,4 bzw. 3,4,5 kann kontinuierlich oder schrittweise getaktet erfolgen. Zu diesem Zweck ist ein Antrieb 12 vorgesehen, der den Karussellförderer 1 mit einer stufenlos regelbaren Winkelgeschwindigkeit oder als Drehschubförderer mit regelbarer Taktfrequenz antreibt.

Weiterhin ist aus den Figuren 2 und 3 ersichtlich, daß jede Dosierkammer 2, in Richtung der Drehachse des Karussellförderers 1 gesehen, kreisausschnittsförmig ausgebildet ist und alle Dosierkammern 2 im Verbund miteinander einen geschlossen, die Führungssäule 1a des Karussellförderers 1 konzentrisch umschließenden Kreisring bilden. Der Meridianschnitt durch die erfindungsgemäße Maschine gemäß Figur 3 zeigt deutlich, wie einerseits in den Positionen P₄ bis P₈ die Dosierkammer 2 über ihre Fülleitung 2a und die teleskopförmige, durch die Preßvorrichtung 10 angetriebene Rohranordnung 2b und den Füllkopf 2c mit der Käseform 3,4 verbunden ist. Letztere befindet sich in der Wanne 6 unterhalb des Molkespiegels M, und das Käsebruch-Molke-Gemisch K/M kann unter dem Einfluß der Schwerkraft in die Käseform 3,4 eintreten. Dort erfolgt über die siebartig perforierten Wände der Käseform 3,4 und unterhalb des Molkespiegels eine Trennung des in der Käseform 3,4 verbleibenden Käsebruchs K von der Molke M und deren Abscheidung in das Molkebad.

Auf der anderen Seite des Meridianschnittes in Figur 3 ist in den Positionen P₁₀ bis P₁₉ das Pressen des in der Käseform 3,4 verbliebenen Käsebruchs K über den Deckelteil 5 dargestellt. Man erkennt, daß der Füllkopf 2c gegenüber der Fülleitung 2a mittels der teleskopförmigen, durch die Preßvorrichtung 10 angetriebenen Rohranordnung 2b in Preßrichtung P auf den Deckelteil 5 gedrückt wird. Die Käseform 3,4 stützt sich dabei über die Stütz- und Führungsbahn 8 auf dem Gestell 7 ab. Eine ebensolche Stütz- und Führungsbahn 8 ist in der Wanne 6 im Bereich der Positionen P₄ bis P₈ dargestellt. Wie insbesondere aus Figur 3 ersichtlich ist, ist der Füllkopf 2c derart ausgebildet, daß er entweder den oberen Rand der rahmenförmigen Käseform 3 dicht umfassen oder den Deckelteil 5, vorzugsweise durch seitlichen und in der radialen Erstreckung des Karussellförderers 1 orientierten Einschub, aufnehmen kann. Durch diese Ausgestaltung ist auch sichergestellt, wie dies insbesondere aus Figur 2 zu erkennen ist, daß einerseits der Deckelteil 5 über den Deckel-Einlaufförderer 14 in radialer Richtung in die Position P₉ eingeschoben, und daß andererseits die Käseform 3,4,5, ebenfalls in radialer Richtung, über die Ausschubvorrichtung 11 aus der Position P₂₀ mittels des Käseformen-Auslaufförderers 15 in den Auslauf A verschoben werden kann.

Der rahmenförmige Teil 3 der Käseform 3,4 läßt sich, ohne daß dies im einzelnen dargestellt ist, durch Trennwände kassettenartig unterteilen, wobei der Deckelteil 5 eine der Unterteilung in Kassetten 3* entsprechende Unterteilung in Preßglieder 5* (vergleiche Figur 3) aufweist. Die Vorteile einer derartigen Ausgestaltung wurden einleitend bereits beschrieben.

## Patentansprüche

1. Verfahren zur Käsebruch-Abfüllung in Käseformen, wobei ein Käsebruch-Molke-Gemisch in eine siebartige, mit einem separaten Deckelteil versehene und mit Molke geflutete Käseform unterhalb des Molkespiegels eingefüllt wird, in welcher die mit dem Käsebruch mitfolgende Molke sich abscheidet und in welcher ein Pressen des Käsebruchs ausgeführt wird, **dadurch gekennzeichnet**,
daß nacheinander und in kontinuierlicher oder schrittweise getakteter Abfolge
- die Käseform (3,4) jeweils einem Molkebad zugeführt und dort vollständig geflutet wird,
- gleiche Volumina (V) aus dem stetig zugeführten Käsebruch-Molke-Gemisch (K/M) abgegrenzt werden,
- jeweils ein Volumen (V) einer Käseform (3,4) zugeteilt und über eine vorbestimmte erste Zeitspanne (T_{F}) in diese restlos eingefüllt wird,
- unterhalb des Molkespiegels eine Trennung des in der Käseform (3,4) verbleibenden Käsebruchs (K) von der Molke (M) und deren Abscheidung in das Molkebad erfolgt,
- die Käseform (3,4) aus dem Molkebad vollständig herausgehoben und
- der Käsebruch (K) jeweils über eine vorbestimmte zweite Zeitspanne (T_{P}) in der Käseform (3,4) gepreßt und anschließend einer Weiterbehandlung zugeführt wird.

2. Verfahren nach Anspruch 1, dadurch gekennzeichnet, daß das abgegrenzte Volumen (V) des Käsebruch-Molke-Gemischs (K/M), dessen Füllzeit (T_{F}) in die Käseform (3,4) und die Preßzeit (T_{P}) des Käsebruchs (K) in der Käseform (3,4) in einem festen Verhältnis zueinander regelbar sind.

3. Verfahren nach Anspruch 1, dadurch gekennzeichnet, daß das abgegrenzte Volumen (V) des Käsebruch-Molke-Gemischs (K/M) unabhängig von der Füllzeit (T_{F}) und der Preßzeit (T_{P}) regelbar ist.

4. Verfahren nach einem der Ansprüche 1 bis 3, dadurch gekennzeichnet, daß jeweils das Volumen (V), die Füllzeit (T_{F}) und die Preßzeit (T_{P}) auf einen bestimmten, in Grenzen frei wählbaren Nennwert festlegbar ist, der im wesentlichen von den beiden anderen unabhängig ist.

5. Maschine zum Anwenden des Verfahrens nach einem der Ansprüche 1 bis 4, mit einer unterhalb des Molkespiegels in einer Wanne angeordneten Käseform, die an eine der Zufuhr von Käsebruch-Molke-Gemisch dienenden Füllleitung angeschlossen ist, wobei der Deckelteil zusätzlich als Preßglied dient, mit dem der in der Käseform verbleibende Käsebruch gepreßt wird, dadurch gekennzeichnet, daß ein Karussellförderer (1) vorgesehen ist, in dem eine Anzahl (1 bis n) Käseformen (3,4) in regelmäßiger, über den Umfang verteilter Anordnung Positionen (P₁ bis Pₙ) durchlaufen, wobei der ersten Position (P₁) ein Käseformen-Einlaufförderer (13) zur Zufuhr der Käseformen (3,4) zugeordnet ist, der letzten Position (Pₙ) eine Ausschubvorrichtung (11) sowie ein Käseformen-Auslaufförderer (15) zur Abfuhr der mit Käsebruch (K) gefüllten Käseformen (3,4,5) und einer dazwischenliegenden Position (Pᵢ) ein Deckel-Einlaufförderer (14) sowie eine Deckel-Auflegevorrichtung (17) zugeordnet sind,
daß jeder Käseform (3,4) eine Dosierkammer (2) zugeordnet ist, die jeweils über eine mit einem auf- und abwärts beweglichen Füllkopf (2c) versehene, mittels einer VerSchlußvorrichtung (9) schaltbare Fülleitung (2a) mit der Käseform (3,4) bzw. deren Deckelteil (5) verbindbar ist, daß zwischen der ersten und einer besagter dazwischenliegender Position nachfolgenden Position (P₁ und Pᵢ₊₁) mit Molke (M) gefüllte Wanne (6) angeordnet ist, deren Eintauchtiefe sich unterhalb der Einlaufhöhe des Käseformen-Einlaufförderers (13) erstreckt und wenigstens ein vollständiges Fluten der Käseformen (3,4) erlaubt, daß zwischen zweiter und dritter Position (P₂ und P₃) und oberhalb der Dosierkammer (2) eine Zufuhrleitung (16) für das Käsebruch-Molke-Gemisch (K/M) endet, und daß zwischen der besagten dazwischenliegenden und der letzten Position (Pᵢ und Pₙ) jedem Deckelteil (5) der Käseform (3,4) eine Preßvorrichtung (10) zugeordnet ist.

6. Maschine nach Anspruch 5, dadurch gekennzeichnet, daß die Dosierkammern (2) einen mittelbar oder unmittelbar angetriebenen Teil des Karussellförderers (1) bilden und jeweils über ihre Fülleitung (2a) und den Füllkopf (2c) die Käseform (3,4) bzw. (3,4,5) zwangsweise verschieben.

7. Maschine nach Anspruch 5 oder 6, dadurch gekennzeichnet, daß der Karussellförderer (1) die Käseform (3,4) bzw. (3,4,5) kontinuierlich oder schrittweise getaktet verschiebt.

8. Maschine nach Anspruch 7, dadurch gekennzeichnet, daß ein Antrieb (12) vorgesehen ist, der den Karussellförderer (1) mit einer stufenlos regelbaren Winkelgeschwindigkeit oder als Drehschubförderer mit regelbarer Taktfrequenz antreibt.

9. Maschine nach einem der Ansprüche 5 bis 8, dadurch gekennzeichnet, daß jede Dosierkammer (2), in Richtung der Drehachse des Karussellförderers (1) gesehen, kreisausschnittsförmig ausgebildet ist und alle Dosierkammern im Verbund miteinander einen geschlossenen, eine Führungssäule (1a) des Karussellförderers (1) konzentrisch umschließenden Kreisring bilden.

10. Maschine nach einem der Ansprüche 5 bis 9, dadurch gekennzeichnet, daß der Füllkopf (2c) gegenüber der Füllleitung (2a) mittels einer teleskopförmigen, durch die Preßvorrichtung (10) angetriebenen Rohranordnung (2b) verschoben wird.

11. Maschine nach einem der Ansprüche 5 bis 10, dadurch gekennzeichnet, daß der Füllkopf (2c) derart ausgebildet ist, daß er entweder den oberen Rand der rahmenförmigen Käseform (3) dicht umfassen oder den Deckelteil (5), vorzugsweise durch seitlichen und in der radialen Erstreckung des Karussellförderers (1) orientierten Einschub, aufnehmen kann.

12. Maschinen nach einem der Ansprüche 5 bis 10, dadurch gekennzeichnet, daß die Käseform (3) kassettenartig unterteilt ist, und der Deckelteil (5) eine der Unterteilung in Kassetten (3*) entsprechende Unterteilung in Preßglieder (5*) aufweist.

## Claims

1. Process for filling cheese moulds with curd during which a mixture of curd and whey is filled below whey level into a sieve-like cheese mould with a separate cover and flooded with whey, in which the whey carried along with the curd precipitates and in which the curd is pressed, **characterized in that**
the following steps are performed in succession and in continuous or gradually cycled sequence
- each cheese mould (3, 4) is supplied to a whey bath where it is flooded completely,
- equal volumes (V) of the continuously supplied curd-whey-mixture (K/M) are separated,
- one volume (V) at a time is assigned to a cheese mould (3, 4) and is filled completely into it over a predetermined first time span (T_{F}),
- below whey level, a separation of the curd (K) remaining in the cheese mould (3, 4) from the whey (M) and precipitation of the whey into the whey bath occurs,
- the cheese mould (3, 4) is lifted completely out of the whey bath, and
- the curd (K) is pressed over a predetermined second time span (T_{P}) in the cheese mould (3, 4) and afterwards brought to further treatment.

2. Process according to Claim 1, characterized in that the separated volume (V) of the curd-whey-mixture (K/M), its filling time (T_{F}) into the cheese mould (3, 4), and the pressing time (T_{P}) of the curd (K) in the cheese mould (3, 4) are adjustable at fixed proportion.

3. Process according to Claim 1, characterized in that the separated volume (V) of the curd-whey-mixture (K/M) is adjustable independently from filling time (T_{F}) and pressing time (T_{P}).

4. Process according to one of Claims 1 to 3, characterized in that the volume (V), the filling time (T_{F}), and the pressing time (T_{P}) can be fixed at a certain nominal value freely selectable within limits that is essentially independent from the other two values.

5. Machine for performing the process according to one of Claims 1 to 4, with a cheese mould arranged below whey level in a reservoir connected to a filling line for supply of the curd-whey-mixture, with the cover serving additionally as a pressing member to press the curd remaining in the cheese mould, characterized in that a carousel conveyer (1) is provided in which a number (1 to n) of cheese moulds (3, 4) distributed regularly over the perimeter run through positions (P₁ to Pₙ), with a cheese mould inlet conveyer (13) for supply of the cheese moulds (3, 4) being assigned to the first position (P₁), and a discharge device (11) and a cheese mould discharge conveyer (15) for removal of the cheese moulds (3, 4, 5) filled with curd (K) being assigned to the last position (Pₙ), and a cover inlet conveyer (14) and a device for putting on the cover (17) being assigned to an intermediate position (Pᵢ), that a dosage chamber (2) connectable to the cheese mould (3, 4) or its cover (5) respectably is assigned to each cheese mould (3, 4) by means of a filling line (2a) provided with a filling head (2c) moveable in up and down direction and switchable by means of a closing device (9), that between the first position and an intermediate position (P₁ and Pᵢ₊₁), a reservoir (6) filled with whey (M) is arranged that has an immersion depth below the inlet level of the cheese mould inlet conveyer (13) that allows at least a complete flooding of the cheese moulds (3, 4), that a supply line (16) for the curd-whey-mixture (K/M) ends between the second and the third position (P₂ and P₃) and above the dosage chamber (2), and that between said intermediate position and the last position (Pᵢ and Pₙ), a pressing device (10) is assigned to each cover part (5) of the cheese mould (3, 4).

6. Machine according to Claim 5, characterized in that the dosage chambers (2) form a directly or indirectly driven part of the carousel conveyer (1) and automatically shift the cheese mould (3, 4) or (3, 4, 5) by means of their filling line (2a) and the filling head (2c).

7. Machine according to Claim 5 or 6, characterized in that the carousel conveyer (1) shifts the cheese mould (3, 4) or (3, 4, 5) continuously or gradually cycled.

8. Machine according to Claim 7, characterized in that a drive (12) is provided that drives the carousel conveyer (1) at a continuously adjustable angle speed or as a rotary pushing conveyer with an adjustable cycle frequency.

9. Machine according to one of Claims 5 to 8, characterized in that each dosage chamber (2), seen in direction of the rotation axis of the carousel conveyer (1), is designed as part of a circle and that all dosage chambers together form a closed concentrical circle ring around a column sleeve (1a) of the carousel conveyer (1).

10. Machine according to one of Claims 5 to 9, characterized in that the filling head (2c) is shifted with regard to the filling line (2a) by means of a telescopic pipe arrangement (2b) driven by the pressing device (10).

11. Machine according to one of Claims 5 to 10, characterized in that the filling head (2c) is designed to either encircle tightly the upper rim of the frame-shaped cheese mould (3) or to accomodate the cover (5), preferably by means of lateral insertion aligned in radial extension of the carousel conveyer (1).

12. Machines according to one of Claims 5 to 10, characterized in that the cheese mould (3) is divided into cassettes, and that the cover (5) provides a division into pressing members (5*) corresponding to the division into cassettes (3*).

## Revendications

1. Procédé de remplissage des moules à fromage avec du caillé, selon lequel on verse un mélange de caillé et de petit lait dans un moule à fromage du genre filtre, pourvu d'une pièce distincte formant couvercle et immergé dans du petit lait, en dessous du niveau de celui-ci, moule dans lequel le petit lait entraîné avec le caillé se sépare de celui-ci, et dans lequel on presse le caillé, caractérisé en ce que
successivement et selon un déroulement continu ou par étapes
- le moule à fromage (3, 4) est acheminé vers un bain de petit lait et y est complètement immergé,
- on définit des volumes égaux (V) du mélange caillé/petit lait (K/M) acheminé en continu,
- un volume (V) correspondant à un moule à fromage (3, 4) est fourni et déversé en totalité dans celui-ci pendant un premier laps de temps (T_{F}) prédéterminé,
- une séparation du caillé (K) qui demeure dans le moule à fromage (3, 4) et du petit lait (M) et l'évacuation de ce dernier dans le bain de petit lait s'opère au dessous du niveau du petit lait,
- on retire complètement le moule à fromage (3, 4) du bain de petit lait,
- le caillé (K) est pressé pendant un deuxième laps de temps (T_{P}) dans le moule à fromage (3, 4) et est ensuite acheminé vers une autre station de traitement.

2. Procédé selon la revendication 1, caractérisé en ce que le volume (V) défini de mélange caillé/petit lait (K/M) et le temps de remplissage (T_{F}) du moule à fromage (3, 4) avec celui-ci peuvent être réglés l'un par rapport à l'autre, selon un rapport fixe.

3. Procédé selon la revendication 1, caractérisé en ce que le volume (V) défini du mélange caillé/petit lait (K/M), peut être réglé indépendamment du temps de remplissage (T_{F}) et du temps de pressage (T_{P}).

4. Procédé selon l'une des revendications 1 à 3, caractérisé en ce que le volume (V), le temps de remplissage (T_{F}) et le temps de pressage (T_{P}) peuvent être définis à une valeur nominale librement choisie dans certaines limites et qui est sensiblement indépendante des deux autres.

5. Machine pour la mise en oeuvre du procédé selon l'une des revendications 1 à 4, comportant un moule placé en dessous du niveau de petit lait, dans une cuve, et qui est raccordé à une ligne de remplissage servant à l'alimentation en mélange caillé/petit lait, la pièce formant couvercle servant en outre d'organe de pressage, avec lequel le caillé demeurant dans le moule à fromage est pressé,
caractérisé en ce qu'il est prévu un alimentateur à carrousel (1), dans lequel un nombre (1 à n) de moules à fromage (3, 4) passent par des positions (p₁ à pₙ) réparties régulièrement sur le pourtour, un dispositif d'amenée (13) de moules à fromage destiné à amener des moules à fromage (3, 4) étant associé à la première position (p₁), un dispositif d' évacuation (11), ainsi qu'un dispositif de sortie (15) de moules à fromage destiné à l'évacuation des moules à fromage (3, 4, 5) remplis de caillé (K), étant associés à la dernière position (pₙ), un dispositif d'amenée de couvercles (14) ainsi qu'un dispositif de pose de couvercles (17) étant associés à une position (pᵢ) intermédiaire,
en ce qu'une chambre de dosage (2), qui peut être reliée au moule à fromage (3, 4) ou avec sa pièce formant couvercle (5), par une ligne de remplissage (2a) pourvue d'une tête de remplissage (2c) mobile vers le haut et vers le bas, qui est commandée au moyen d'un dispositif de fermeture (9), est associée à chaque moule à fromage (3, 4)
en ce qu'une cuve (6) remplie de petit lait (M) est placée entre la première position et une position suivant ladite position intermédiaire (p₁ et Pᵢ₊₁), la profondeur d'immersion de ladite cuve s'étendant en dessous de la hauteur d'arrivée du dispositif (13) d'amenée des moules à fromage (3, 4) et permettant au moins une immersion complète du moule à fromage (3, 4),
en ce qu'une conduite d'arrivée (16) de mélange caillé/petit lait (K/M), se termine entre la deuxième et la troisième positions (p₂ et p₃) et au dessus de la chambre de dosage (2),
et en ce qu'un dispositif de pressage (10) est associé à chaque couvercle (5) de moule à fromage (3, 4) entre ladite position intermédiaire et la dernière position (pᵢ et pₙ).

6. Machine selon la revendication 5, caractérisée en ce que les chambres de dosage (3) constituent une pièce de l'alimentateur à carrousel (1), entraînée directement ou indirectement, et déplacent le moule à fromage (3, 4) ou (3, 4, 5) de manière forcée, par l'intermédiaire de leur ligne de remplissage (2a) et de leur tête de remplissage (2c).

7. Machine selon la revendication 5 ou 6, caractérisée en ce que l'alimentateur à carrousel (1) déplace les moules à fromage (3, 4) ou (3, 4, 5) en continu ou par incréments.

8. Machine selon la revendication 7, caractérisée en ce qu'un moteur est prévu (12) pour entraîner l'alimentateur à carrousel (1) selon une vitesse angulaire qui peut être réglée en continu ou par impulsions à fréquence réglable.

9. Machine selon l'une des revendications 5 à 8, caractérisée en ce que chaque chambre de dosage (2), vue dans la direction de l'axe de rotation de l'alimentateur à carrousel (1), est conformée en segment de cercle et en ce que toutes les chambres de dosage réunies constituent un anneau circulaire fermé, entourant de manière concentrique une colonne de guidage (1a) de l'alimentateur à carrousel (1).

10. Machine selon l'une des revendications 5 à 9, caractérisée en ce que la tête de remplissage (2c) se déplace par rapport à la ligne de remplissage (2a) au moyen d'un système de tuyauteries (2b) télescopique, entraîné par le dispositif de pressage (10).

11. Machine selon l'une des revendications 5 à 10, caractérisée en ce que la tête de remplissage (2c) est conformée de façon telle qu'elle peut soit entourer de manière étanche le bord supérieur du moule à fromage (3) en forme de cadre soit recevoir la pièce formant couvercle (5), de préférence par l'intermédiaire d'un tiroir latéral orienté dans la direction radiale de l'alimentateur à carrousel (1).

12. Machines selon l'une des revendications 5 à 10, caractérisées en ce que le moule à fromage (3) est divisé à la manière de casiers et en ce que la pièce formant couvercle (5) présente une division en organes de pressage (5*) correspondant à la division en casiers (3*).
